(19) Europäisches Patentamt
European Patent Office
Office européen des brevets

(11) Publication number: **0 010 879 B2**

# (12) NEW EUROPEAN PATENT SPECIFICATION

(45) Date of publication of the new patent specification: **11.12.91 Bulletin 91/50**

(21) Application number: **79302135.3**

(22) Date of filing: **08.10.79**

(51) Int. Cl.[5]: **C07C 69/747**, C07C 67/14, A01N 53/00

## (54) Halogenated esters of cyclopropane acids, their preparation, compositions and use as pesticides.

(30) Priority: **27.10.78 GB 4226778**
**24.11.78 GB 4594378**

(43) Date of publication of application:
**14.05.80 Bulletin 80/10**

(45) Publication of the grant of the patent:
**27.04.83 Bulletin 83/17**

(45) Mention of the opposition decision:
**11.12.91 Bulletin 91/50**

(84) Designated Contracting States:
**BE CH DE FR GB IT NL**

(56) References cited:
**EP-A- 0 008 340**
**EP-A- 0 010 879**
**FR-A- 2 379 506**
**GB-A- 2 000 764**

(73) Proprietor: **IMPERIAL CHEMICAL INDUSTRIES PLC**
**Imperial Chemical House, Millbank**
**London SW1P 3JF (GB)**

(72) Inventor: **Huff, Roger Kenneth**
**'Byefields' Green Lane Walesby**
**Nr. Newark Nottinghamshire (GB)**

(74) Representative: **Bishop, Nigel Douglas et al**
**Imperial Chemical Industries PLC Legal Department: Patents PO Box 6 Bessemer Road**
**Welwyn Garden City Herts, AL7 1HD (GB)**



Jouve, 18, rue Saint-Denis, 75001 PARIS

## Description

**This invention relates to novel cyclopropane derivatives useful as insecticides, to processes for their pre**paration, to compositions comprising them and to methods of combating insect and similar invertebrate pests using them.

Certain naturally occurring esters of cyclopropane carboxylic acids have long been known to possess insecticidal properties, but these compounds have been too easily degraded by ultra violet light to be of much use in agriculture. Several groups of synthetic compounds based on cyclopropane carboxylic acids (for example those disclosed in British patent specifications nos 1,243,858 and 1,413,491 ) have been evaluated in an attempt to discover compounds of sufficient light stability for use as general agricultural insecticides.

A particularly useful group of such compounds is that disclosed in British patent specification no 2,000,764 and Belgian patent no 863,151. These compounds combine good light stability with excellent contact and residual insecticidal properties, but, in common with the compounds described in British patent specifications 1.243,858 and 1,413,491, they possess little or no fumigant activity. A further group of compounds, halobenzyl esters of 3-(2,2-dihalovinyl)-2,2-dimethylcyclopropane carboxylic acids, is described in Belgian patent 862,109 as having insecticidal properties but there is no indication that the compounds possess fumigant activity.

European Patent Application No EP-A-8340 (which forms part of the State of the Art for the present invention by virtue of Articles 54(3) and 54(4) EPC) discloses unspecified mixtures of cis- and trans-isomers of the pentafluorobenzyl esters of 3-(2-chloro-3,3,3-trifluoroprop-1-en-1-yl)-2,2-dimethylcyclopropanecarboxylic acid and 3-(2-bromo-3,3,3-trifluoroprop-1-en-1-yl)-2,2-dimethylcyclopropanecarboxylic acid.

The present invention relates to certain novel halobenzyl esters of 3-(2-halo(or trifluoromethyl)-3,3,3-trifluorophenyl)-2,2-dimethylcyclopropane carboxylic acids with an extremely with an extremely high level of insecticidal and acaricidal activity which may be used not only as contact or residual insecticides but also as fumigant insecticides.

Accordingly this invention provides α compound of formula:—

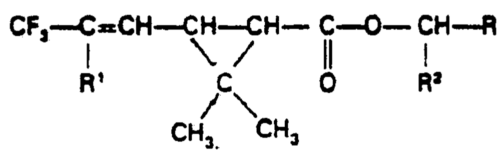

(I)

wherein $R^1$ is chloro, bromo, fluoro or trifluoromethyl, $R^2$ is hydrogen, methyl or cyano, and R is a halophenyl group bearing at least one flurorine atom, provided that where R is pentafluorophenyl and $R^2$ is hydrogen $R^1$ may not be chloro or bromo.

Preferably R is a tetrahalophenyl or pentahalophenyl group in which at least four fluorine atoms are present, for example one of the following groups

2,3,4,5-tetrafluorophenyl
2,3,4,6-tetrafluorophenyl
4-chloro-2,3,5-trifluorophenyl
4-chloro-2,3,5,6-tetrafluorophenyl
4-bromo-2,3,5,6-tetrafluorophenyl
pentafluorophenyl.

However compounds of Formula I in which R represents a halophenyl group containing from 1 to 3 fluorine atoms also have useful insecticidal properties.

Particular compounds according to the invention as defined by formula I above include those set out in Table I herein in which the meanings for $R^1$, $R^2$ and R are given for each compound.

TABLE I

| Compound No. | $R^1$ | $R^2$ | R |
|---|---|---|---|
| 1 | $CF_3$ | H | 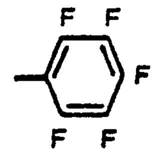 |
| 2 | F | H | 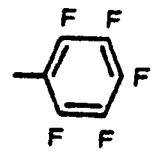 |
| 5 | Cl | $CH_3$ | 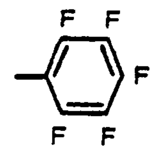 |
| 6 | Cl | CN | 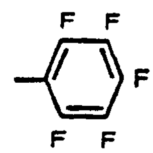 |
| 7 | Cl | H | 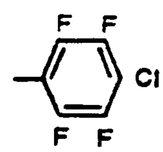 |
| 8 | Cl | H | 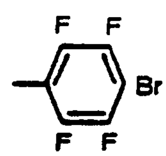 |

TABLE I (Continued)

| Compound No. | $R^1$ | $R^2$ | R |
|---|---|---|---|
| 9 | Cl | H | 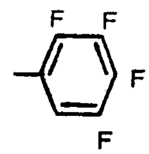 |
| 10 | Cl | H | 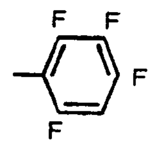 |
| 11 | Cl | H | 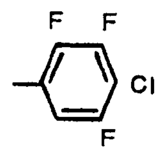 |
| 12 | Cl | H | 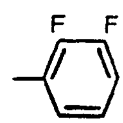 |
| 13 | Cl | H | 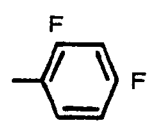 |
| 14 | Cl | H | 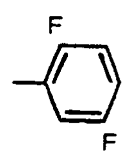 |
| 15 | Cl | H | 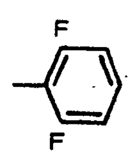 |
| 16 | Cl | H | 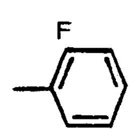 |

TABLE I (Continued)

| Compound No. | $R^1$ | $R^2$ | R |
|---|---|---|---|
| 17 | Cl | H | 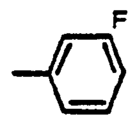 |
| 18 | Cl | H | 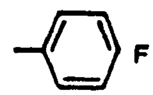 |

It will be appreciated by those skilled in the art that the compounds represented by formula I are capable of existing in various geometrical and stereoisomeric forms. Thus there may be *cis* and *trans* isomers arising from the substitution pattern of the cyclopropane ring, and *E*- and Z-isomers arising from the substituted vinyl group when $R^1$ is not trifluoromethyl. In addition two of the three carbon atoms of the cyclopropane are capable of existing in either R- or S-configurations since they ere asymmetrically substituted.

The invention also provides the pentaflubrobenzyl ester of (±)-cis-3-(2-chloro-3,3,3-trifluoroprop-1-en-1-yl)-2,2-dimethylcyclopropanecarboxylic acid and the particularly useful single isomer thereof, pentafluorobenzyl (+)-cis-3-(Z-2-chloro-3,3,3-trifluoroprop-1-en-1-yl)-2,2-dimethylcyclopropane-carboxylate, which is believed to have the (1R,3R) configuration in the cyclopropane ring.

The compounds of the invention according to Formula I are esters and may be prepared by conventional esterification processes, of which the following are examples.

(a) An acid of formula:—

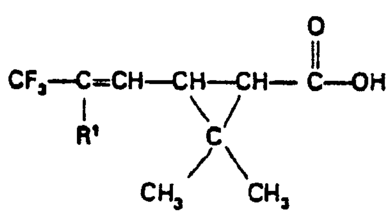

where $R^1$ has any of the meanings given hereinabove, may be reacted directly with an alcohol of formula:—

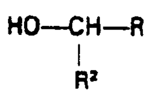

where $R^2$ and R have any of the meanings given hereinabove, the reaction preferably taking place in the presence of an acid catalyst, for example, dry hydrogen chloride.

(b) An acid halide of formula:—

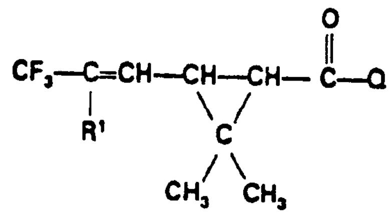

where Q represents a halogen atom, preferably a chlorine atom, and $R^1$ as any of the meanings given hereinabove, may be reacted with an alcohol of formula:—

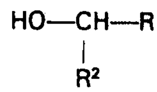

wherein $R^2$ and R have any of the meanings given hereinabove, the reaction preferably taking place in the presence of a base, for example, pyridine, alkali metal hydroxide or carbonate, or alkali metal alkoxide.

(c) An acid of formula:—

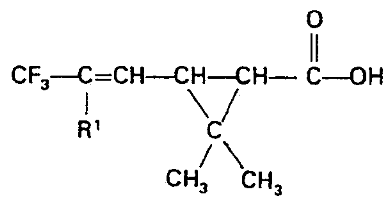

or, preferably, an alkali metal salt thereof, may be reacted with a halide of formula:—

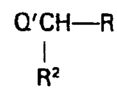

where Q' represents a halogen atom, preferably the chlorine atom, and $R^2$ and R have any of the meanings given hereinabove, or with the quaternary ammonium salts derived from such halides with tertiary amines, for example pyridine, or trialkyl amines such as triethylamine.

(d) A lower alkyl ester of formula:—

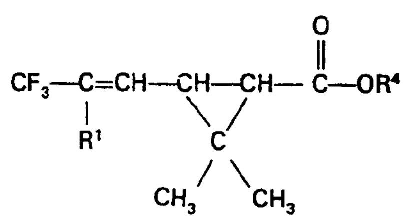

where $R^4$ represents a lower alkyl group containing up to six carbon atoms, preferably the methyl or ethyl group, and $R^1$ has any of the meanings given hereinabove, is heated with an alcohol of formula:—

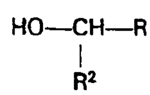

where $R^2$ and R have any of the meanings given hereinabove, to effect a transesterification reaction. Preferably the process is performed in the presence of a suitable catalyst, for example, an alkali metal alkoxide, such as sodium methoxide, or an alkylated titanium derivative, such as tetramethyl titanate.

All of these conventional processes for the preparation of esters may be carried out using solvents and diluents for the various reactants where appropriate, and may be accelerated or lead to higher yields of product when performed at elevated temperatures or in the presence of appropriate catalysts, for example phase-transfer catalysts.

The preparation of individual isomers may be carried out in the same manner but commencing from the corresponding individual isomers of compounds of formula II. These may be obtained by conventional isomer separation techniques from mixtures of isomers. Thus *cis* and *trans* isomers may be separated by fractional crystallisation of the carboxylic acids or salts thereof, whilst the various optically active species may be obtained by fractional crystallisation of salts of the acids with optically active amines, followed by regeneration of the optically pure acid.

The optically pure isomeric form of the acid (or its equivalent acid chloride or ester) may then be reacted the appropriate alcohol to produce a compound of formula I in the form of an individually pure isomer thereof.

The preparation of the compounds of formula:—

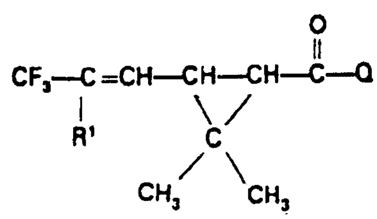

wherein Q is hydroxy, alkoxy or halo, and $R^1$ and $R^2$ are as defined hereinabove, useful as intermediates in the preparation of the compounds of the invention, is fully described in British Patent Specification 2,000,764 and in Belgian patent no. 863151.

The compounds of the formula:—

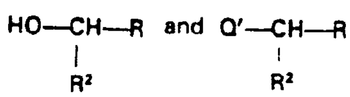

are either known *per se* (see for example Belgian Patent 862.109. and F G Drakesmith. J. Chem. Soc. Perkin Trans. I. 1972 (2), 184-9) or, if not known, may be prepared by analogous procedures to those which are used to prepare the compounds which are known.

When the processes for preparing the compounds of Formula I are performed using intermediates which are themselves mixtures of isomers the products obtained will also be mixtures of isomers. Thus, the product would be a mixture of (±)-*cis* and (+)-*trans* isomers (perhaps with one form predominating) if the intermediate acid or acid derivative was used in the form of a mixture of (+)-*cis* and (±)-*trans* isomers. If a single isomer, of the acid, e.g. the (+)-*cis* isomer with Z-configuration in the 2-chloro-3,3,3-trifluoropropenyl group, was used, the product would also be the single isomer of that stereo-chemical configuration, or a pair of isomers if there is an asymmetric carbon atom in the alcohol moiety.In order to avoid confusion the products obtained by the processes described in the Examples herein are referred to as Products A to Z, each product being defined in terms of isomeric composition with reference to the compounds of Table I as follows:—

Product A

pentafluorobenzyl 3 - (2 - trifluoromethyl) - 3,3,3 - trifluoroprop - 1 - on - 1 - yl) - 2,2 - dimethylcyclopropane carboxylate (Compound no 1, Table I) consisting of 30% w/w of the (±)-*cis* isomer and 70% w/w of the (±)-*trans* isomer.

Product B

pentafluorobenzyl 3 - (2,3,3,3 - tetrafluoroprop - 1 - en - 1 - yl) - 2,2 - dimethylcyclopropane carboxylate (Compound no 2, Table I) consisting of 50% w/w of the (±)-*cis* isomer and 50% w/w of the (±)-*trans* isomer.

Product C*

pentafluorobenzyl 3 - (2 - bromo - 3,3,3 - trifluoroprop - 1 - en - 1 - yl) - 2,2 - dimethylcyclopropane carboxylate (Compound no 3, Table I) consisting of 30% w/w of the (±)-*cis* isomer and 70% w/w of the (±)-*trans* isomer.

Product D*

pentafluorobenzyl 3 - (2 - chloro - 3,3,3 - trifluoroprop - 1 - en - 1 - yl) - 2,2 - dimethylcyclopropane carboxylate (Compound no 4, Table I) consisting of 40% w/w of the (±)-*cis* isomer and 60% w/w of the (±)-*trans* isomer.

Product E*

pentalluorobenzyl 3 - (2 - chloro - 3,3,3 - trifluoroprop - 1 - on - 1 - yl) - 2,2 - dimathylcyclopropane carboxylate (Compound no 4, Table I) consisting of 60% w/w of the (±)-*cis* isomer and 50% w/w of the (±)-*trans* isomer.

product F

pentafluorobenzyl (±) - cis - 3 - (Z - 2 - chloro - 3,3,3 - trifluoroprop - 1 - en - 1 - yl) - 2,2 - dimethylcyclopropane carboxylate.

Product G

pentafluorobenzyl (±) - *cis* - 3 - (Z - chloro - 3,3,3 - trifluoroprop - 1 - en - 1 - yl) - dimethylcyclopropane carboxylate.

Product H

pentafluorobenzyl (—) - cis - 3 - (2 - chloro - 3,3,3 - trifluoroprop - 1 - en - 1 - yl) - 2,2 - dimethylcyclopropane carboxylate.

Product I

pentafluorobenzyl (±)-*trans* - 3 - (Z - 2 - chloro - 3,3,3 - trifluoroprop - 1 - en - 1 - yl) - 2,2 - dimethylcyclopropane carboxylate.

Product J

pentafluorobenzyl (+)-*trans* - 3 - (Z - 2 - chloro - 3,3,3 - trifluoroprop - 1 - en - 1 - yl) - 2,2 - dimethylcyclopropane carboxylate.

Product K

pentafluorobenzyl (—) - *trans* - 3 - (2 - chloro - 3,3,3 - trifluoroprop - 1 - en - 1 - yl) - 2,2 - dimethylcyclopropane carboxylate.

Product L

(±) - 1 - (1 - pentafluorophenyl)ethyl 3 - (2 - chloro - 3,3,3 - trifluoroprop - 1 - en - 1 - yl) - 2,2-dimethylcyclopropane carboxylate (Compound no 5, Table I) consisting of 50% w/w of the (±)-*cis* isomer and 50% w/w of the (±)-*trans* isomer.

Product M

(±) - α - cyano - pentafluorobenzyl (±) - *cis* - 3 - (Z - chloro - 3,3,3 - trifluoroprop - 1 -en - 1 - yl) - 2,2 - dimethylcyclopropane carboxylate (Compound no 6, Table 1).

Product N

4 - chlorotetrafluorobenzyl 3 - (2 - chloro - 3,3,3 - trifluoroprop - 1 - en - 1 - yl) - 2,2 - dimethylcyclopropane carboxylate (Compound no 7, Table I) consisting of 50% w/w of the (±)-*cis* isomer and 50% w/w of the (±)-*trans* isomer.

product O

4 - chlorotetrafluorobenzyl (±) - *cis* - 3 - (2 - chloro - 3,3,3 - trifluoroprop - 1 - en - 1 - yl) - 2,2 - dimethylcyclopropane carboxylate.

Product P

4 - bromotetrafluorobenzyl 3 - (2 - chloro - 3,3,3 - trifluoroprop - 1 - en - 1 - yl) - 2,2 - dimethylcyclopropane carboxylate (Compound no 8 Table I) consisting of 50% w/w of the (±)-*cis* isomer and 50% w/w of the (±)-*trans* isomer.

Product Q

2,3,4,5 - tetrafluorobenzyl (±) - *cis* - 3 - (2 - chloro - 3,3,3 - trifluoroprop - 1 - en - 1 - yl) - 2,2 - dimethylcyclopropane carboxylate (Compound no 9, Table I).

Product R

2,3,4,6 - tetrafluorobenzyl (±) - *cis* - 3 - (2 - chloro - 3,3,3 - trifluoroprop - 1 - en - 1 - yl) - 2,2 - dimethylcyclopropane carboxylate (Compound no 10, Table I).

Product S

4 - chloro - 2,3,5 - trifluorobenzyl 3 - (2 - chloro - 3,3,3 - trifluoroprop - 1 - en - 1 - yl) - 2,2-dimethylcyclopropane carboxylate (Compound no 11, Table I) consisting of 50% w/w of the (±)-*cis* isomer and 50% w/w of the (±)-*trans* isomer.

Product T

2,3 - difluorobenzyl (±) - *cis* - 3 - (2 - chloro - 3,3,3 - trifluoroprop - 1 - en - 1 - yl) - 2,2 - dimethylcyclopropane carboxylate (Compound no 12, Table I).

Product U

2,4 - difluorobenzyl (±) - *cis* - 3 - (2 - chloro - 3,3,3 - trifluoroprop - 1 - en - 1 - yl) - 2,2 - dimethylcyclopropane carboxylate (Compound no 13, Table I).

Product V

2,5 - difluorobenzyl (±) - *cis* - 3 - (2 - chloro - 3,3,3 - trifluoroprop - 1 - en - 1 - yl) - 2,2 - dimethylcyclopropane carboxylate (Compound no 14, Table I).

Product W

2,6 - difluorobenzyl + - *cis* - 3 -(2 - chloro - 3,3,3 - trifluoroprop - 1 en - 1 yl) -2,2 - dimethyl- cyclopropane carboxylate (Compound no 15, Table I).

Product X

2 - fluorobenzyl (±) - *cis* - 3 - (2 - chloro - 3,3,3 - trifluoroprop - 1 - en - 1 - yl) - 2,2 - dimethylcyclopropane carboxylate (Compound no 16, Table I).

Product Y

3 - fluorobenzyl (±) - *cis* - 3 - (2 - chloro - 3,3,3 - trifluoroprop - 1 - en - 1 - yl) - 2,2 - dimethylcyclopropane carboxylate (Compound no 17, Table I).

Product Z

4 - fluorobenzyl (±) - *cis* - 3 - (2 - chloro - 3,3,3 - trifluoroprop - 1 - en - 1 - yl) - 2,2 - dimethylcyclopropane carboxylate (Compound no 18, Table I).

Products C, D and E are not compounds according to the invention.

The compounds of formula I may be used to combat and control infestations of insect pests and also other invertebrate pests for example, acarine pests. The insect and acarine pests which may be combated and controlled by the use of the invention compounds include those pests associated with agriculture (which term includes the growing of crops for food and fibre products, horticulture and animal husbandry), forestry, the storage of products of vegetable origin, such as fruit, grain and timber, and also those pests associated with the transmission of diseases of man and animals.

In order to apply the compounds to the locus of the pests they ere usually formulated into compositions which include in addition to the insecticidally active ingredient or ingredients of formula I suitable inert diluent or carrier materiels, and/or surface active agents. The compositions may also comprise another pesticidal material, for example another insecticide or acaricide, or a fungicide, or may also comprise a insecticide synergist, such as for example dodecyl imidazole, safroxan, or piperonyl butoxide.

The compositions may be in the form of dusting powders wherein the active ingredient is mixed with a solid diluent or carrier, for example kaolin, bentonite, kieselguhr, or talc, or they may be in the form of granules, wherein the active ingredient is absorbed in a porous granular material for example pumice.

Alternatively the compositions may be in the form of liquid preparations to be used as dips or sprays, which are generally aqueous dispersions or emulsions of the active ingredient in the presence of one or more known wetting agents, dispersing agents or emulsifying agents (surface active agents).

Wetting agents, dispersing agents and emulsifying agents may be of the cationic, anionic or non-ionic type. Suitable agents of the cationic type include, for example. quaternary ammonium compounds, for example, cetyltrimethyl ammonium bromide. Suitable agents of the anionic type include, for example, soaps, salts of aliphatic monoesters of sulphuric acid, for example sodium lauryl sulphate, salts of sulphonated aromatic compounds, for example sodium dodecylbenzenesulphonate, sodium, calcium or ammonium lignosulphonate, butylnaphthalene sulphonate, and a mixture of the sodium salts of diisopropyl- and triisopropylnaphthalene sulphonates. Suitable agents of the non-ionic type include, for example, the condensation products of ethylene oxide with fatty alcohols such as oleyl alcohol or cetyl alcohol, or with alkyl phenols such as octyl phenol, nonyl phenol and octyl cresol. Other non-ionic agents are the partial esters derived from long chain fatty acids and hexitol anhydrides, the condensation products of the said partial esters with ethylene oxide, and the lecithins.

The compositions may be prepared by dissolving the active ingredient in a suitable solvent, for example, a ketonic solvent such as diacetone alcohol, or an aromatic solvent such as trimethylbenzene and adding the mixture so obtained to water which may contain one or more known wetting, dispersing or emulsifying agents. Other suitable organic solvents are dimethyl formamide, ethylene dichloride, isopropyl alcohol, propylene glycol and other glycols, toluene, kerosene, white oil, methylnaphthalene, xylenes and trichloroethylene, N-methyl-2-pyrrolidone and tetrahydro furfuryl alcohol (THFA).

The compositions to be used as sprays may also be in the form of aerosols wherein the formulation is held in a container under pressure in the presence of a propellant such as fluorotrichloromethane or dichlorodifluoromethane.

The compositions which are to be used in the form of aqueous dispersions or emulsions are generally supplied in the form of a concentrate containing a high proportion of the active ingredient or ingredients, the said concentrate to be diluted with water before use. These concentrates are often required to withstand storage for prolonged periods and after such storage, to be capable of dilution with water to form aqueous preparations which remain homogeneous for a sufficient time to enable them to be applied by conventional spray equipment. The concentrates may contain 10—85% by weight of the active ingredient or ingredients. When diluted to form aqueous preparations such preparations may contain varying amounts of the active ingredient depending upon the purpose for which they are to be used. For agricultural or horticultural purposes, an aqueous preparation containing between 0.0001% and 0.1% by weight of the active ingredient is particularly useful.

In use the compositions are applied to the pests, to the locus of the pests, to the habitat of the pests, or to growing plants liable to infestation by the pests, by any of the known means of applying pesticidal compositions, for example, by dusting or spraying.

The compositions of the invention are very toxic to wide varieties of insect and other invertebrate pests, including, for example, the following:—

*Aphis fabae* (aphids)
*Megoura viceae* (aphids)
*Aedes aegypti* (mosquitoes)
*Dysdercus fasciatus* (capsids)
*Musca domestica* (houseflies)
*Pieris brassicae* (white butterfly, larvae)
*Plutella maculipennis* (diamond back moth, larvae)
*Phaedon cochleariae* (mustard beetle)
*Telarius cinnabarinus* (carmine spider mite)
*Aonidiella spp.* (scale insects)
*Trialeuroides spp.* (white flies)
*Blattella germanica* (cockroaches)
*Spodoptera littoralis* (cotton leaf worm)
*Chortiocetes terminifera* (locusts)
*Diabrotica spp.* (rootworms)

The compounds of formula I and compositions comprising them have shown themselves to be particularly useful in controlling lepidopteran pests of cotton, for example *Spodoptera* spp. and *Heliothis* spp. The fumigant properties of the compounds enable them to be used to combat pests which inhabit the soil, for example *Diabrotica* spp. They are also excellent knock down agents and as such may be used in conjunction with other insecticides to combat public health pests such as flies. They are also very useful in combating insect and acarine pests which infest domestic animals, such as *Lucilia sericata*, and ixodid ticks such as *Boophilus* spp., *Ixodes* spp., *Amblyomma* spp., *Rhipicephalus* spp., and *Dermaceutor* spp. They are effective in combating both susceptible and resistant strains of these pests in their adult, larval and intermediate stages of growth, and may be applied to the infested host animal by topical, oral or parenteral administration.

The following Examples illustrate the various aspects of the invention.

In the following Examples, Products C, D and E are not compounds according to the present invention.

Example 1

This Example illustrates the insecticidal properties of the Products A to Z.

The activity of the products was determined using a variety of insect pests. The product was used in the form of liquid preparations containing 100, 50, 25, and 12.5 p.p.m. by weight of the product. The preparations were made by dissolving the product in a mixture of solvents consisting of 4 parts by volume of acetone and 1 part by volume of diacetone alcohol. The solutions were then diluted with water containing 0.01 % by weight of a wetting agent sold under the trade name "LISSAPOL" NX until the liquid preparations contained the required concentration of the product. "Lissapol" is a Trade Mark.

The test procedure adopted with regard to each pest was basically the same and comprised supporting a number of the pests on a medium which was usually a host plant or a foodstuff on which the pests feed, and treating either or both the pests and the medium with the preparations. The mortality of the pests was then assessed at periods usually varying from one to three days after the treatment. Details are given in Table IIA.

The results of the tests are given in Table IIB for each of the products A to Z at the rate in part per million given in the second column as a grading of mortality on a scale of 0—9 wherein

0 represents less than 10% mortality
1 represents from 10 to 19% mortality
2 represents from 20 to 29% mortality
3 represents from 30 to 39% mortality
4 represents from 40 to 49% mortality
5 represents from 50 to 59% mortality
6 represents from 60 to 69% mortality
7 represents from 70 to 79% mortality
8 represents from 80 to 89% mortality
9 represents from 90 to 100% mortality

In Table IIB the pest oranism used is designated by a letter code and the pest species, the support medium or food, and the type and duration of the test is given in Table IIA

TABLE IIA

| Code Letters (Table IIB) | Pest Species | Support Medium / Food | Type of Test* | Duration (days) |
|---|---|---|---|---|
| MD | *Musca domestica* (houseflies – adults) | Cotton wool / milk, sugar | Contact | 2 |
| SL | *Spodoptera littoralis* (cotton leaf worm – larvae) | Cotton leaves | Residual | 1 |
| PX | *Plutella xylostella* (diamond back moth – larvae) | Mustard leaves | Residual | 3 |
| SG | *Sitophilus granarius* (grain weevil – adults) | Grain | Contact | 3 |
| DB | *Diabrotica balteata* (rootworm – larvae) | Filter paper | Contact | 3 |

* "Contact" test indicates that both pests and medium were treated and "residual" indicates that the medium was treated before infestation with the pests.

TABLE IIB

| Product | Rate (ppm) | Pest Species | | | | |
|---|---|---|---|---|---|---|
| | | MD | SL | PX | SG | DB |
| A | 100 | 9 | 9 | 2 | 9 | – |
| B | 25 | 9 | 9 | 1* | 9 | – |
| C | 25 | 9 | 7 | 9 | 9 | – |
| D | 25 | 9 | 9 | 1* | 6 | 8 |
| E | 25 | 9 | 6 | 8 | 5 | 6 |
| F | 100 | 9 | 9 | 9 | 9 | – |
| G | 25 | 9 | 9 | 2* | 9 | – |
| H | 12.5 | 0 | 0 | 0 | 0 | 9 |
| I | 100 | 9 | 9 | 9 | 9 | – |
| J | 12.5 | 9 | 9 | 8 | 9 | – |
| K | 25 | 0 | 0 | 0 | 0 | 2 |
| L | 100 | 3 | 2 | 0 | 0 | 8* |
| M | 100 | 5 | 0 | 2 | 0 | 8* |
| N | 50 | 9 | 9 | 5 | – | 9 |
| O | 25 | 9 | 9 | 9 | – | 9 |
| P | 25 | 9 | 9 | 8 | 9 | 8 |
| Q | 100 | 9 | 9 | 9 | 9 | – |
| R | 25 | 4 | 9 | 1 | 9 | – |
| S | 50 | 9 | 9 | 9 | 9 | 9 |
| T | 25 | 9 | 2 | 2 | 9 | 0 |
| U | 25 | 2 | 0 | 5 | 0 | 0 |
| V | 25 | 6 | 0 | 2 | 9 | 0 |
| W | 25 | 9 | 6 | 3 | 9 | 0 |
| X | 25 | 6 | 7 | 8 | 5 | 0 |
| Y | 100 | 5 | 9 | 7 | 9 | 0 |
| Z | 100 | 8 | 9 | 9 | 9 | 0 |

Example 2

This Example illustrates the preparation of pentafluorobenzyl (±)-*cis*-(*Z*-chloro-3,3,3-trifluoroprop-1 -en-1-yl)-2,2-dimethylcyclopropane carboxylate (Product F).

A solution of pentafluorobenzyl alcohol (0.75 g) in toluene (4.0 ml) was added to a stirred solution of (±)-*cis*-

1 -chlorocarbonyl-3-(Z-2-chloro-3,3,3-trifluoroprop- 1 -en- 1 -yl)-2,2-dimethylcyclopropane (1.1 g) in toluene (10.0 ml) at the ambient temperature, and then a solution of pyridine (0.325 g) in toluene (4.0 ml) was added to the mixture. After keeping at the ambient temperature for 18 hours the mixture was diluted with water and extracted with chloroform. The extracts were washed with dilute hydrochloric acid and with water, dried over anhydrous magnesium sulphate, and concentrated by evaporation of the solvent. The residual oil was subjected to purification by column chromatography using a silica gel column and chloroform as eluent. The purified oil was identified by n.m.r. as pentafluorobenzyl (±)-*cis*-3-(Z-2-chloro-3,3,3-trifluoroprop-1 -en- 1 -yl)-2,2-dimethylcyclopropane carboxylate.

N.m.r. ('H) ($CCl_4$): 1.20—1.44 (m, 6H); 1.80-2.28 (m, 2H); 5.16 (s, 2H); 6.75—6.92 (m, 1H).

Example 3

This Example illustrates the preparation of pentafluorobenzyl (±)-*cis/trans*-3-(2-trifluoromethyl-3,3,3-trifluoroprop-1-en-1-yl)-2,2-dimethylcyclopropane carboxylate containing 30% w/w of the (±)-*cis* isomer (Product A).

A mixture of (±)-*cis/trans*-3-(2-trifluoromethyl-3,3,3-trifluoroprop-1 -en-1 -yl)-2,2-dimethylcyclopropane carboxylic acid (30% w/w (±)-*cis* isomer, 250 mg) and thionyl chloride (2.0 ml) was heated at the reflux temperature for two hours after which the excess thionyl chloride was removed by azeotropic distillation with benzene. The residual oil, confirmed as (±)-*cis/trans*-1-chlorocarbonyl-3-(2-trifluoromethyl-3,3,3-trifluoroprop-1-en-1-yl)-2,2-dimethylcyclopropane by infra-red spectroscopy, was diluted with benzene (5.0 ml) and to the solution was added pentafluorobenzyl alcohol (180 mg) and dry pyridine (75 mg) and the mixture stirred at the ambient temperature for two hours. The mixture was then poured into a mixture of ice and dilute hydrochloric acid (100 ml) and extracted with diethyl ether (4 x 25 ml). The extracts were washed successively with cold water, dilute sodium bicarbonate solution, and with water and then dried over anhydrous magnesium sulphate. After removal of the volatile portion by evaporation under reduced pressure the residual oil was purified by column chromatography using a silica gel column and chloroform as eluent. After removal of the chloroform by evaporation under reduced pressure the eluted material (310 mg) was confirmed by nuclear magnetic resonance spectroscopy as being pentafluorobenzyl (±)-*cis/trans*-3-(2-trifluoromethyl-3,3,3-trifluoroprop-1 -en-1-yl)-2,2-dimethylcyclopropane carboxylate containing 30% w/w of the (±)-*cis* isomer and 70% w/w of the (±)-*trans* isomer (Product A).

N.m.r. ('H) ($CCl_4$: 1.22—1.46 (m, 6H); 1.80—2.64 (m, 2H); 5.28 (s, 2H); 6.32—7.40 (m, 1 H).

Example 4

By the use of the procedure illustrated in Example 2 Product I (pentafluorobenzyl (±)-*trans*-3-(Z-3-(2-chloro-3,3,3-trifluoroprop-1-en-1-yl)-2,2-dimethylylcyclopropane carboxylate) was obtained from the acid chloride of the corresponding acid and pentafluorobenzyl alcohol.

N.m.r. ('H) ($CCl_4$): 1.20—1.44 (m, 6H); 1.72—1.82 (m, 1H); 2.28—2.52 (m, 1H); 5.26 (s, 2H); 6.10—6.30 ( m, 1H).

Example 5

The procedure illustrated in Example 3 was also used to obtain Products B—E, G, H and J to Z from the corresponding carboxylic acids and alcohols, as follows:—

Product B from pentafluorobenzyl alcohol and (±)-*cis/trans*-3-(2,3,3,3-tetrafluoroprop-1-en-1-yl)-2,2-dimethylcyclopropane carboxylic acid (containing 50% w/w of the (±)-*cis* isomer.

Product C from pentafluorobenzyl alcohol and (±)-*cis/trans*-3-(2-bromo-3,3,3-trifluoroprop-1 -en-1-yl)-2,2-dimethylcyclopropane carboxylic acid (containing 30% w/w of the (±)-*cis* isomer).

Product D from pentafluorobenzyl alcohol and (±)-*cis/trans*-3-(2-chloro-3,3,3-trifluoroprop-1 -en-1-yl)-2,2-dimethylcyclopropane carboxylic acid (containing 40% w/w of the (±)-*cis* isomer).

Product E from pentafluorobenzyl alcohol and (±)-*cis/trans*-3-(2-chloro-3,3,3-trifluoroprop-1 -en- 1-yl)-2,2-dimethylcyclopropane carboxylic acid (containing 50% w/w of the (±)-cis isomer).

Product G from pentafluorobenzyl alcohol and (+)-*cis*-3-(Z-2-chloro-3,3,3-trifluoroprop-1-en-1-yl)-2,2-dimethylcyclopropane carboxylic acid.

Product H from pentafluorobenzyl alcohol and (—)-*cis*-3-(2-chloro-3,3,3-trifluoroprop-1-en-1-yl)-2,2-dimethylcyclopropane carboxylic acid.

Product J from pentafluorobenzyl alcohol and (±)-*trans*-3-(Z-2-chloro-3,3,3-trifluoroprop-1-en-1-yl)-2,2-dimethylcyclopropane carboxylic acid.

Product K from pentafluorobenzyl alcohol and (—)-trans-3-(2-chloro-3,3,3-trifluoroprop-1-en-1-yl)-2,2-dimethylcyclopropene cerboxylicecid.

Product L from (±)- 1-(pentafluorophenyl)ethanol and (±)-*cis/trans*-3-(2-chloro-3,3,3-trifluoroprop-1-en-1-yl)-2,2-dimethylcyclopropane carboxylic acid (containing 50% w/w of the (±)-*cis* isomer).

Product M from (±-α-cyano-3-pentafluorobenzyl alcohol and (±)-*cis*-3-(*Z*-2-chloro-3,3,3-tri-fluoroprop-1-en-1-yl)-2,2-dimethylcyclopropane carboxylic acid.

Product N from 4-chlorotetrafluorobenzyl alcohol and (±)-*cis/trans*-3-(2-chloro-3,3,3-trifluoroprop-1 - en-1 -yl)-2,2-dimethylcyclopropane carboxylic acid (containing 50% w/w of the (±)-*cis* isomer).

Product O from 4-chlorotetrafluorobenzyl alcohol and (±)-*cis*-3-(2-chloro-3,3,3-trifluoroprop-1-en-1- yl)-2,2-dimethylcyclopropane carboxylic acid.

Product P from 4-bromotetrafluorobenzyl alcohol and (±)-*cis/trans*-3-(2-chloro-3,3,3-trifluoroprop-1 - en- 1 -yl)-2,2-dimethylcyclopropane carboxylic acid (containing 50% w/w of the (±)-*cis* isomer.

Product Q from 2,3,4,5-tetrafluorobenzyl alcohol and (±)-*cis*-3-(2-chloro-3,3,3-trifluoroprop- 1 -en-1- yl)-2,2-dimethylcyclopropane carboxylic acid.

Product R from 2,3,4,6-tetrafluorobenzyl alcohol and (±)-*cis*-3-(2-chloro-3,3,3-trifluoroprop- 1 -en-1- yl)-2,2-dimethylcyclopropane carboxylic acid.

Product S from 4-chloro-2,3,5-trifluorobenzyl alcohol and (±)-*cis/trans*-3-(2-chloro-3,3,3-trifluoroprop- 1 -en- 1 -yl)-2,2-dimethylcyclopropane carboxylic acid (containing 50% w/w of the (±)-*cis* isomer).

Product T from 2,3-difluorobenzyl alcohol and (±)-*cis*-3-(2-chloro-3,3,3-trifluoroprop-1-en-1-yl)-2,2- , dimethylcyclopropane carboxylic acid.

Product U from 2,4-difluorobenzyl alcohol and (±)-*cis*-3-(2-chloro-3,3,3-trifluoroprop-1-en-1-yl)-2,2-dimethylcyclopropane carboxylic acid.

Product V from 2,5-difluorobenzyl alcohol and (±)-*cis*-3-(2-chloro-3,3,3-trifluoroprop-1-en-1-yl)-2,2-dimethylcyclopropane carboxylic acid.

Product W from 2,6-difluorobenzyl alcohol and (±)-*cis*-3-(2-chloro-3,3,3-trifluoroprop-1-en-1-yl)-2,2-dimethylcyclopropane carboxylic acid.

Product X from 2-fluorobenzyl alcohol and (±)-*cis*-3-(2 -chloro-3,3,3-trifluoroprop- 1 -en- 1 -yl)-2,2-dimethyl-cyclopropane carboxylic acid.

Product Y from 3-fluorobenzyl alcohol and (±)-*cis*-3-(2-chloro-3,3,3-trifluoroprop-1 -en-1-yl)-2,2-dimethyl-cyclopropane carboxylic acid.

Product Z from 4-fluorobenzyl alcohol and (±)-*cis*-3-(2-chloro-3,3,3-trifluoroprop-1 -en-1-yl)-2,2-dimethyl-cyclopropane carboxylic acid.

The above products were identified by N.m.r. spectroscopy and/or elemental microanalysis.

## Claims

1. A compound of formula:

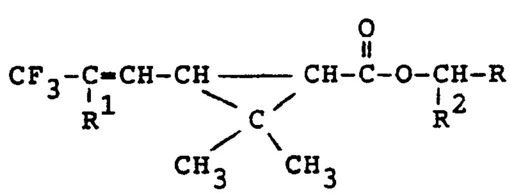

wherein $R^1$ is chloro, bromo, fluoro or trifluoromethyl, $R^2$ is hydrogen, methyl or cyano, and R is a halophenyl group bearing at least one fluorine atom, provided that where R is pentafluorophenyl and $R^2$ hydrogen, $R^1$ may not be chloro or bromo.

2. A compound as claimed in claim 1 wherein R is a tetra or penta-halophenyl group.

3. A compound as claimed in claim 1 wherein R is pentafluorophenyl, 4-chlorotetrafluorophenyl, 4-bromo-tetrafluorophenyl, 2,3,4,5-tetrafluorophenyl or 2,3,4,6-tetrafluorophenyl.

4. A compound as claimed in claim 1 wherein $R^1$ is chloro and $R^2$ is hydrogen.

5. A compound as claimed in claim 1 or claim 4 in which the hydrogen atoms of the cyclopropane ring are <u>cis</u> to one another.

6. Pentafluorobenzyl (±)-<u>cis</u>-3-(2-chloro-3,3,3-trifluoroprop-1-en-1-yl)-2,2-dimethylcyclopropane carboxylate.

7. Pentafluorobenzyl (+)-<u>cis</u>-3-(<u>Z</u>-2-chloro-3,3,3-trifluoroprop-1-en-1-yl)-2,2-dimethylcyclopropane carboxylate.

8. A process for preparing a compound according to claim 1 comprising the step of reacting a compound of formula:

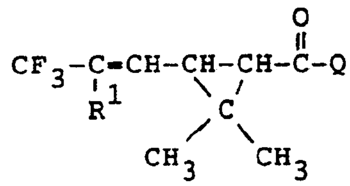

where $R^1$ has any of the meanings given in claim 1 and Q represents halo, preferably chloro, with a compound of formula:-

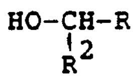

where R and $R^2$ have any of the meanings given in Claim 1, optionally carried out in the presence of a base.

9. A process as claimed in Claim 8 where the base is pyridine.

10. A composition for use as an insecticide comprising a compound according to Claim 1, in association with insecticidally inert solid or liquid diluents.

11. A composition as claimed in Claim 10 additionally comprising one or more other insecticides.

12. A composition as claimed in claims 9 or 10 additionally comprising an insecticide synergist.

13. A method of combating pests at a locus which comprises applying to the locus a composition as claimed in any one of claims 10 to 12.

**Patentansprüche**

1. Verbindung der Formel

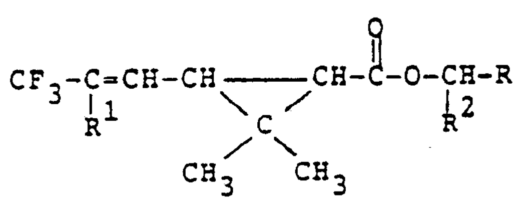

worin $R^1$ für Chloro, Bromo, Fluoro oder Trifluoromethyl steht, $R^2$ für Wasserstoff, Methyl oder Cyano steht und R für eine Halogenophenylgruppe, die mindestens ein Fluoratom trägt, steht, mit der Maßgabe, daß, wenn R für Pentafluorophenyl und $R^2$ für Wasserstoff steht, $R^1$ nicht Chloro oder Bromo sein kann.

2. Verbindung nach Anspruch 1, bei welcher R für eine Tetra- oder Pentahalogenophenylgruppe steht.

3. Verbindung nach Anspruch 1, bei welcher R für Pentafluorophenyl, 4-Chlorotetrafluorophenyl, 4-Bromotetrafluorophenyl, 2,3,4,5-Tetrafluorophenyl oder 2,3,4,6-Tetrafluorophenyl steht.

4. Verbindung nach Anspruch 1, bei welcher $R^1$ für Chloro und $R^2$ für Wasserstoff steht.

5. Verbindung nach Anspruch 1 oder 4, bei welcher die Wasserstoffatome des Cyclopropanrings sich in gegenseitiger cis-Stellung befinden.

6. (±)-cis-3-(2-Chloro-3,3,3-trifluoroprop-1-en-1-yl)-2,2-dimethylcyclopropancarbonsäure-pentafluorobenzylester.

7. (+)-cis-3-(Z-2-Chloro-3,3,3-trifluoroprop-1-en-1-yl)-2,2-dimethylcyclopropancarbonsäure-pentafluorobenzylester.

8. Verfahren zur Herstellung einer Verbindung nach Anspruch 1, bei welchem eine Verbindung der Formel

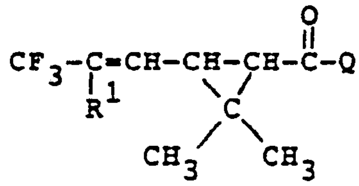

worin $R^1$ eine der in Anspruch 1 angegebenen Bedeutungen besitzt und Q für Halogeno, vorzugsweise Chloro, steht, mit einer Verbimdung der Formel

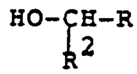

worin R und $R^2$ eine der in Anspruch 1 angegebenen Bedeutunger. besitzen, gegebenenfalls in Gegenwart einer Base, umgesetzt wird.

9. Verfahren nach Anspruch 8, bei welchem die Base Pyridin ist.

10. Zusammensetzung für die Verwendung als Insecticid, welche eine Verbindung nach Anspruch 1 gemeinsam mit einem insecticid inerten festen oder flüssigen Verdünnungsmittel enthält.

11. Zusammensetzung nach Anspruch 10, welche zusätzlich ein oder mehrere weitere Insecticide enthält.

12. Zusammensetzung nach Anspruch 9 oder 10, welche zusätzlich einen Insecticidsynergisten enthält.

13. Verfahren zur Bekämpfung von Schädlingen an einem bestimmten Ort, bei welchem auf den Ort eine Zusammensetzung nach einem der Ansprüche 10 bis 12 aufgebracht wird.

**Revendications**

1. Un composé de formule :

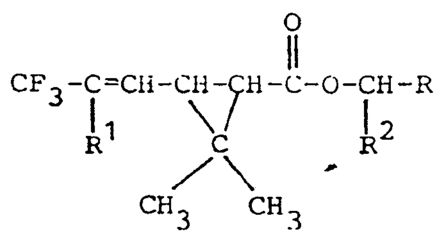

dans laquelle $R^1$ est un radical chloro, bromo, fluoro ou trifluorométhyle, $R^2$ est l'hydrogène ou le radical méthyle ou cyano et R est un groupe halogénophényle portant au moins un atome de fluor, sous réserve que lorsque R est un groupe pentafluorophényle, $R^1$ ne puisse pas être un radical chloro ou bromo.

2. Composé suivant la revendication 1, dans lequel R est un groupe tétra- ou penta-halogénophényle.

3. Composé suivant la revendication 1, dans lequel R est le groupe pentafluorophényle, 4-chlorotétrafluorophényle, 4-bromotétrafluorophényle, 2,3,4,5-tétrafluorophényle ou 2,3,4,6-tétrafluorophényle.

4. Composé suivant la revendication 1, dans lequel $R^1$ est le radical chloro et $R^2$ est l'hydrogène.

5. Composé suivant la revendication 1 ou la revendication 4, dans lequel les atomes d'hydrogène du noyau de cyclopropane sont en configuration <u>cis</u> les uns par rapport aux autres.

6. Le (±)-<u>cis</u>-3-(2-chloro-3,3,3-trifluoropro-1-ène-1-yl)-2,2-diméthylcyclopropanecarboxylate de pentafluorobenzyle.

7 . Le (+)-<u>cis</u>-3-(<u>Z</u>-2-chloro-3,3,3-trifluoroprop-1-ène-1-yl)-2,2-diméthylcyclopropanecarboxylate de pentafluorobenzyle.

8 . Procédé de préparation d'un composé suivant la revendication 1, comprenant l'étape de réaction d'un composé de formule :

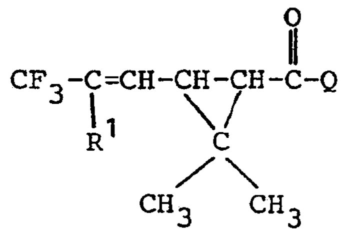

dans laquelle $R^1$ a l'une quelconque des définitions données dans la revendication 1 et Q représente un radical halogéno, de préférence chloro, avec un composé de formule :

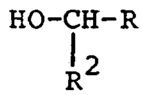

dans laquelle R et $R^2$ ont l'une quelconque des définitions données dans la revendication 1, éventuellement conduite en présence d'une base.

9. Procédé suivant la revendication 9, dans lequel la base est la pyridine.

10. Une composition destinée à être utilisée comme insecticide, comprenant un composé suivant la revendication 1, en association avec des diluants solides ou liquides inertes du point de vue insecticide.

11. Composition suivant la revendication 10 , contenant en outre un ou plusieurs autres insecticides.

12. Composition suivant la revendication 9 ou 10, renfermant en outre un insecticide à action synergique.

13. Procédé pour combattre des parasites en un lieu, qui consiste à appliquer à ce lieu une composition suivant l'une quelconque des revendications 10 à 12 .